# EUROPÄISCHE PATENTSCHRIFT

(11) **EP 2 653 334 B1**
(45) Veröffentlichungstag und Bekanntmachung des Hinweises auf die Patenterteilung: **23.01.2019**
(21) Anmeldenummer: 13163740.7
(22) Anmeldetag: 15.04.2013
(51) Int. Cl.: B60K 37/06, B60R 11/02, H04M 1/60

(54) **Verfahren und Vorrichtung zum Betrieb eines Kraftfahrzeug-Multimediasystems**
Method and apparatus for operating a motor vehicle multimedia system
Procédé et dispositif de fonctionnement d'un système multimédia de véhicule automobile

(30) Priorität: 17.04.2012 DE 102012206275
(43) Veröffentlichungstag der Anmeldung: 23.10.2013
(73) Patentinhaber: Ford Global Technologies, LLC, Dearborn, MI 48126 (US)
(72) Erfinder: Spahl, Robert, 51109 Köln (DE); Fleming, Steve David, Hockley, Essex SS5 4SE (GB)
(74) Vertreter: Dörfler, Thomas

(56) Entgegenhaltungen:
- WO-A1-02/23933

## Beschreibung

Die Erfindung betrifft ein Verfahren und eine Vorrichtung zum Betrieb eines Kraftfahrzeug-Multimediasystems gemäß den Oberbegriffen der unabhängigen Patentansprüche.

Aus der WO 02/23933 A1 ist ein Verfahren zum Betrieb eines Kraftfahrzeug-Multimediasystems bekannt, bei dem versucht wird, ein Mobilgerät mit dem Kraftfahrzeug zu koppeln. Dabei wird in dem Kraftfahrzeug automatisch versucht, eine Datenverbindung mit dem Mobilgerät herzustellen.

Kraftfahrzeuge werden heutzutage häufig bereits herstellerseitig mit Multimediasystemen ausgestattet, die z.B. Autoradios mit CD- bzw. MP3-Spielern, Navigationsgeräte, Freisprecheinrichtungen für Mobiltelefonie bzw. sprachgesteuerte SMS- und Internet-Kommunikation sowie einen gemeinsam genutzten Bildschirm umfassen können.

Kraftfahrzeughersteller müssen in derartigen Fällen beachten, dass diese Systeme die Vorschriften und Regularien für deren Nutzung erfüllen, welche im Hinblick auf Vermeidung von Ablenkung des Fahrers während der Fahrt und damit zur Unfallverhütung gelten und welche von Land zu Land verschieden sein können.

Regularien zur Vermeidung einer Fahrerablenkung gibt es z.B. dergestalt, dass der Fahrer Bedienelemente mit den Fingern erreichen kann, ohne seine Sitzposition verändern zu müssen, sowie dergestalt, dass optische Anzeigeeinrichtungen - wie z.B. Bildschirme - nicht zu weit weg von der normalen Blickrichtung des Fahrers beim Fahren liegen und gut ablesbar sein sollen, um die Zeit zu minimieren, die der Fahrer den Blick von der Straße abwendet, wenn er ein Bedienelement sucht oder auf einen Bildschirm blickt, wobei Bedienelemente und Bildschirm auch in einem Touchscreen vereint sein können. Ein derartiger Touchscreen bildet eine HMI (Human Machine Interface; Mensch-Maschine-Schnittstelle zwischen Fahrer und Fahrzeug), mit deren Hilfe der Fahrer nicht nur Rundfunkempfang, Kommunikation oder Fahrzeugnavigation steuern und wiedergeben lassen kann, sondern z.B. auch Fahrzeugeinstellungen anzeigen und ändern kann. All diese Funktionalitäten und die zu die zu deren Realisierung verwendete Hard- und Software sollen hierin in dem Begriff Kraftfahrzeug-Multimediasystem eingeschlossen ein.

Regularien zur Vermeidung von Fahrerablenkung gibt es auch für den Gebrauch von Mobiltelefonen im Kraftfahrzeug, welcher in vielen Ländern verboten oder nur eingeschränkt erlaubt ist. Häufig ist es erlaubt, eine Freisprecheinrichtung zu verwenden, welche z. B. durch eine Kabelverbindung oder eine drahtlose Bluetooth®-Verbindung des Mobiltelefons mit dem Kraftfahrzeug-Multimediasystem realisiert werden kann und das Mobiltelefon mit dem Multimediasystem so zusammenarbeiten lässt, dass den Regularien Genüge getan ist.

Mit zunehmender Funktionalität von Mobiltelefonen, insbesondere in Form von Smartphones, auf denen frei programmierbare Applikationen laufen können, Anwendungsprogramme, die allgemein "Apps" genannt werden, bieten sich immer mehr Möglichkeiten, ein Mobiltelefon mit einem Kraftfahrzeug-Multimediasystem zusammenarbeiten zu lassen, und diese Möglichkeiten werden von Seiten der Hersteller von Mobiltelefonen und Apps auch genutzt. Smartphones und andere handliche Geräte mit Bildschirm oder Touchscreen, die nicht fest im Kraftfahrzeug eingebaut sind und auf denen Apps laufen können, wie z.B. Tablet-Computer, werden hierin als Mobilgeräte bezeichnet.

Dabei wird unter einer Zusammenarbeit von Mobilgerät und Multimediasystem verstanden, dass das Mobilgerät irgendwelche Hard- und/oder Software des Multimediasystems nutzt, oder umgekehrt.

Ein Kraftfahrzeughersteller steht einerseits in der Pflicht, dass seine Produkte den Regularien zur Vermeidung von Fahrerablenkung genügen, andererseits hat er aber wenig Einfluss darauf, dass diese Regularien auch dann eingehalten werden, wenn jemand in seinen Kraftfahrzeugen Mobilgeräte und Software fremder Hersteller benutzt, welche einen mehr oder weniger weitreichenden Zugriff auf das Kraftfahrzeug-Multimediasystem bekommen können, wie es Fahrzeugkäufer auch verlangen.

Der Erfindung liegt die Aufgabe zu Grunde, ein Verfahren und eine Vorrichtung zum Betrieb eines Kraftfahrzeug-Multimediasystems bereitzustellen, mit denen sichergestellt werden kann, dass Regularien zur Vermeidung von Fahrerablenkung auch dann eingehalten werden, wenn versucht wird, ein Mobilgerät mit dem Kraftfahrzeug zu koppeln.

Diese Aufgabe wird durch ein Verfahren und eine Vorrichtung zum Betrieb eines Kraftfahrzeug-Multimediasystems gemäß den unabhängigen Patentansprüchen gelöst. Vorteilhafte Weiterbildungen der Erfindung ergeben sich aus den abhängigen Patentansprüchen.

Die Erfindung erleichtert es Kraftfahrzeugherstellern, Kraftfahrzeuge mit bereits eingebauten so genannten Phone-Docks anzubieten, wie es sie bislang im Zubehörhandel für nachträgliche Montage gibt. Bei schon eingebauten Phone-Docks ist nämlich nicht der Benutzer, sondern der Fahrzeughersteller dafür verantwortlich, dass die Regularien zur Vermeidung von Fahrerablenkung eingehalten werden.

Die Erfindung kann aber auch in Kraftfahrzeugen Anwendung finden, die lediglich eine Hard- und Softwareschnittstelle für einen Mobilgerät-Anschluss bieten, wenn aufgrund weitreichender Zugriffsmöglichkeiten der Geräte aufeinander nicht ohne Weiteres gewährleistet werden kann, dass die Regularien zur Vermeidung einer Fahrerablenkung eingehalten werden.

D.h., der Versuch, das Mobilgerät mit dem Kraftfahrzeug zu koppeln, kann darin bestehen, das Mobilgerät mechanisch und/oder elektrisch bzw. elektronisch mit dem Multimediasystem zu verbinden.

Eine rein elektr(on)ische Verbindung kann durch eine Kabel- oder Drahtlosverbindung für Datenkommunikation und/oder Stromversorgung des Mobilgeräts realisiert werden, z.B. eine Bluetooth®- oder USB-Verbindung. Wird eine derartige Verbindung hergestellt und wird festgestellt, dass das vom Fahrzeughersteller festgelegte Programm nicht auf dem Mobilgerät läuft oder gestartet werden kann, blockiert das Kraftfahrzeug-Multimediasystem eine weitere Zusammenarbeit mit dem Mobilgerät, zumindest insoweit, als diese irgendwelche Interaktionen des Multimediasystems mit dem Fahrer des Kraftfahrzeugs beinhaltet, welche den Regularien zur Vermeidung von Fahrerablenkung nicht genügen.

In einer bevorzugten Ausführungsform der Erfindung umfasst die zu ermöglichende Kopplung des Mobilgeräts mit dem Kraftfahrzeug eine stabile Anbringung des Mobilgeräts an einem in Reichweite des Fahrers befindlichen Platz im Kraftfahrzeug. Ein in dieser Hinsicht geeigneter Platz wäre z. B. die A-Säule des Kraftfahrzeugs. In einer bevorzugten Ausführungsform der Erfindung ist jedoch vorgesehen, das Mobilgerät vor einem Bildschirm am Armaturenbrett des Kraftfahrzeugs anzubringen, wo der Kraftfahrzeughersteller leicht eine geeignete Haltemechanik vorsehen kann, die für eine Vielzahl von Mobilgerät-Typen ausgelegt sein kann. Diese Haltemechanik ist nur dann funktionsfähig, wenn das vom Fahrzeughersteller festgelegte Programm auf dem Mobilgerät läuft oder gestartet werden kann, und wird ansonsten gesperrt.

In einer bevorzugten Ausführungsform der Erfindung wird die genannte Haltemechanik mittels oder unter Mitwirkung einer beweglichen Blendschutzhaube für den Bildschirm realisiert, wie sie grundsätzlich bekannt ist. Eine derartige Blendschutzhaube kann derart ausgebildet werden, dass sie in eine Halteposition bewegt werden kann, in der sie das Mobilgerät vor dem Bildschirm festhält, wobei eine Bewegung in die Halteposition mechanisch blockiert wird, wenn das vom Fahrzeughersteller festgelegte Programm nicht auf dem Mobilgerät läuft oder gestartet werden kann. In der Halteposition befindet sich das Mobilgerät direkt oder in einem kleinen Abstand vor dem Bildschirm, wobei der letztere Fall insofern günstiger ist, als sich der Bildschirm des Mobilgeräts noch näher am Fahrer befindet als der fest eingebaute Bildschirm.

Die Blendschutzhaube kann in der Halteposition so weit ausgezogen sein, dass sie auch für das Mobilgerät wirksam ist, d.h. Sonnenlicht abschirmt und störende Reflexionen reduziert.

Die Blendschutzhaube bzw. der Bildschirm kann Sensorik umfassen, die feststellt, ob die Blendschutzscheibe ein Mobilgerät festhält. Wenn dies der Fall ist, wird das vom Fahrzeughersteller festgelegte Programm, sofern es nicht schon läuft, automatisch auf dem Mobilgerät gestartet, oder der Fahrzeuginsasse wird aufgefordert, dieses Programm auf dem Mobilgerät zu starten.

Sobald das Programm aktiv ist, wird eine Zusammenarbeit von Mobilgerät und Multimediasystem erlaubt, die vorzugsweise zunächst darin besteht, das, was vorher auf dem Bildschirm des Multimediasystems angezeigt wurde, z. B. Informationen zu Radiostationen, jetzt auf dem Bildschirm des Mobilgeräts anzuzeigen, und zwar in einer ausreichenden Helligkeit und einer zweckmäßigen Anordnung und Größe von Schriftzeichen und Symbolen, wie es in den Grundeinstellungen eines Mobilgeräts normalerweise nicht der Fall ist.

Zu diesem Zweck kann das vom Fahrzeughersteller festgelegte Programm, das der Benutzer z.B. als eine vom Mobilgerät aus dem Internet ladbare App erhalten kann, einige oder alle der Fahrzeugeinstellmenüs und Funktionen, die auch das Multimediasystem des Kraftfahrzeugs aufweist, in einer für Vermeidung von Fahrerablenkung geeigneten Form wiedergeben oder nachahmen, ohne dass der Benutzer das Mobilgerät auf eine Verwendung im Kraftfahrzeug umstellen muss, sofern Letzteres möglich ist.

Der Fahrer kann den Bildschirm des Mobilgeräts auch auf Anzeige bzw. Ausführung von Bildschirmdarstellungen und Programmen des Mobilgeräts umschalten, welche jetzt aber ebenfalls den Regularien zur Vermeidung von Fahrerablenkung genügen müssen, deren Einhaltung durch das vom Fahrzeughersteller festgelegte Programm kontrolliert und durch geeignete Steuerung sichergestellt wird. Dies gilt insbesondere für Mobilgerät-Programme, die Freisprechen und Sprechwahl ermöglichen, aber auch für andere Programme wie z.B. Navigation, Internet-Browser, E-Mail usw.

Es folgt eine Beschreibung von Ausführungsbeispielen anhand der Zeichnungen. Es zeigen:
- Fig. 1: eine Perspektivansicht von Bedienungseinrichtungen einschließlich eines Bildschirms in einem Kraftfahrzeug;
- Fig. 2: eine schematische Schnittansicht durch das Armaturenbrett in Fig. 1 im Bereich des Bildschirms mit einem davor angebrachten Smartphone; und
- Fig. 3: ein Flussdiagramm eines Verfahrens zum Betrieb eines Kraftfahrzeug-Multimediasystems, wenn versucht wird, ein Smartphone vor dem Bildschirm in Figuren 1 und 2 anzubringen.

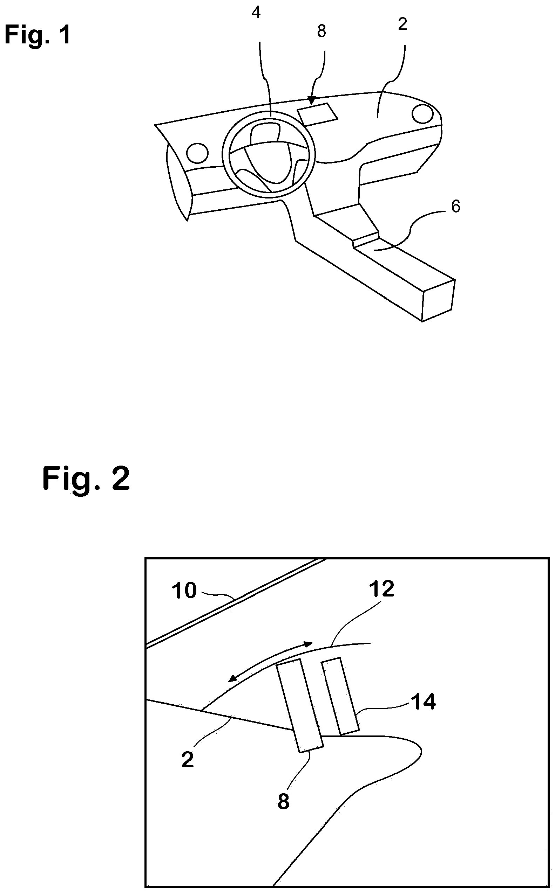

Fig. 1 zeigt eine Kraftfahrzeug-Baugruppe, die ein Armaturenbrett 2, ein Lenkrad 4 und eine Mittelkonsole 6 umfasst. Ungefähr in der Mitte des Armaturenbretts 2 befindet sich ein Bildschirm 8, der auch ein Touchscreen sein kann und Bestandteil eines nicht gezeigten Multimediasystems des Kraftfahrzeugs ist.

Wie in Fig. 2 eher schematisch dargestellt, ist zwischen einer Frontscheibe 10 des Kraftfahrzeugs und dem Armaturenbrett 2 eine Blendschutzhaube 12 für den Bildschirm 8 fest angebracht oder von Hand aus dem Armaturenbrett 2 ausziehbar, wie mit einem Doppelpfeil angezeigt. In ihrer vollständig ausgezogenen Position kann man ein Smartphone 14 zwischen ihr und dem Armaturenbrett 2 einklemmen, wie in Fig. 2 nur angedeutet, wobei das Smartphone 14 den Bildschirm 8 zumindest teilweise verdeckt und in einem Abstand von einigen Zentimetern davon parallel dazu liegt. Das heißt, der Platz vor dem Bildschirm 8 ist als ein Phone-Dock ausgebildet.

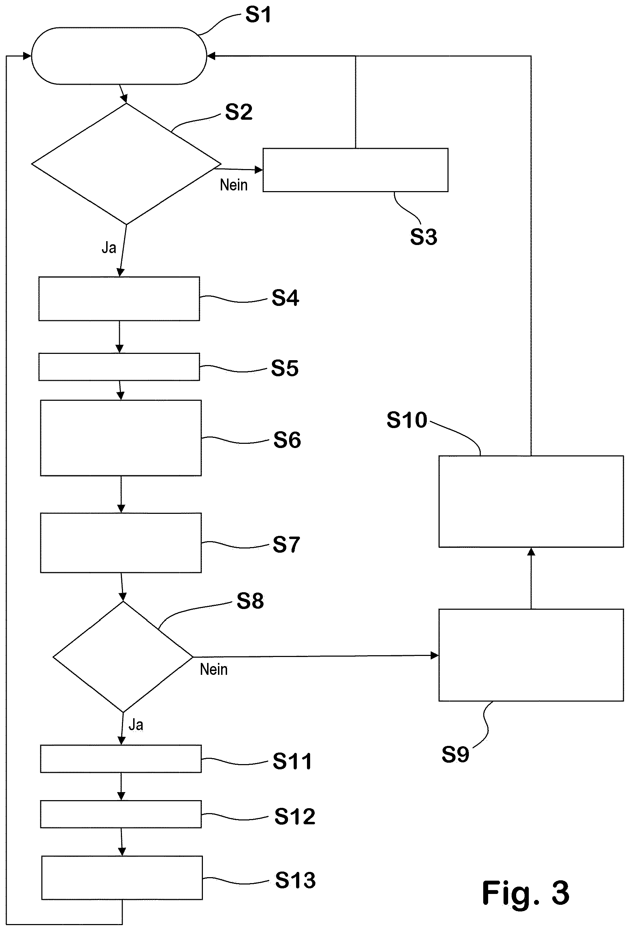

Wenn der Fahrer oder Beifahrer des Kraftfahrzeugs in Schritt S1 in Fig. 3 versucht, das Smartphone 14 durch Öffnen der Blendschutzhaube 12 vor dem Bildschirm 8 einzuklemmen, erkennt dies das Multimediasystem, und es wird durch geeignete Sperren zunächst verhindert, dass das Smartphone 14 dort festgeklemmt werden kann. Das Multimediasystem stellt eine Datenverbindung mit dem Smartphone 14 her, z.B. per Bluetooth® oder ein schon angeschlossenes USB-Kabel. Wenn dies nicht gelingt, wird der Benutzer aufgefordert, eine solche Verbindung herzustellen.

In Schritt S2 prüft das Multimediasystem über die hergestellte Datenverbindung, ob auf dem Smartphone 14 eine bestimmte, vom Fahrzeughersteller hergestellte oder autorisierte App läuft, bzw. versucht, diese App zu starten. Wenn diese App, die dafür eingerichtet ist, sicherzustellen, dass bei der Zusammenarbeit von Mobilgerät und Multimediasystem vom Kraftfahrzeughersteller vorgegebene Spezifikationen in Bezug auf Interaktionen mit dem Fahrer des Kraftfahrzeugs eingehalten werden, nicht läuft oder laufen gelassen werden kann, wird in Schritt S3 weiter verhindert, dass das Smartphone 14 festgeklemmt werden kann, und im Falle einer USB-Verbindung kann auch ein Nachladen des Smartphone 14 über das USB-Kabel gesperrt werden, werden, jedenfalls solange das Smartphone 14 den Bildschirm 8 verdeckt.

Wird im Schritt S2 festgestellt, dass die bestimmte App läuft, wird im Schritt S4 die Festklemmsperre gelöst, und im Schritt S5 kann der Benutzer das Smartphone 14 fest vor dem Bildschirm 8 anbringen.

Außerdem bekommt das Smartphone 14 im Schritt S6 Zugriff auf Fahrzeugsysteme, wie z.B. die Fahrzeuglautsprecher, ein im Fahrzeug eingebautes GPS, und/oder auf Bedienelemente, wie z.B. den Lenkradschalter, und ggf. die Stromversorgung über USB-Kabel, usw. Das Smartphone 14 kann dann unter Verwendung derselben irgendwelche Funktionen oder Apps ausführen oder arbeiten lassen, soweit der Fahrer dadurch nicht übermäßig abgelenkt wird. Zum Beispiel kann das Smartphone 14 über eine fahrzeugeigene Funkverbindung, die möglicherweise besser und günstiger ist als die Funkverbindung des Smartphone 14, auf eine Wetter-Seite zugreifen und die Wettervorhersage in einer geeigneten Form auf dem Bildschirm 8 oder dem Smartphone 14 anzeigen. Zusätzlich sind natürlich zahllose weitere Anwendungen möglich, deren Anzahl und Vielfalt jene der im Kraftfahrzeug integrierten Standardanwendungen weit übersteigen kann. Wird das Smartphone 14 nicht für eigene Funktionen oder Apps verwendet, kann dessen Bildschirm das anzeigen, was sonst auf dem davon verdeckten Bildschirm 8 des Kraftfahrzeugs zu sehen sein würde, welcher zwecks Stromersparnis jetzt abgeschaltet sein kann.

Hingegen werden Funktionen oder Apps des Smartphone 14, die den Fahrer zu sehr vom Verkehrsgeschehen ablenken können, blockiert (Schritt S7).

Im Schritt S8 wird bei jedem Durchlaufen des Entscheidungsbaums von Fig. 3 geprüft, ob die Fahrzeughersteller-App noch läuft. Wenn nicht, wird die im Schritt S6 erlaubte Zusammenarbeit des Smartphone 14 mit dem Multimediasystem beendet (Schritt S9). Optional kann in einem Schritt S10 auch die Festklemmwirkung deaktiviert werden, so dass das Smartphone 14 nicht länger vor dem Bildschirm 8 festgeklemmt bleibt. Anschließend geht das Verfahren zum Schritt S1 zurück.

Wird im Schritt S8 festgestellt, dass die Fahrzeughersteller-App noch läuft, kann das Smartphone 14 weiter mit dem Multimediasystem zusammenarbeiten (Schritt S11), bis der Benutzer im Schritt S12 das Smartphone 14 von seinem Platz vor dem Bildschirm 8 löst, woraufhin die Zusammenarbeit des Smartphone 14 mit dem Multimediasystem beendet wird (Schritt S13) und zum Schritt S1 zurückgekehrt wird.

## Patentansprüche

1. Verfahren zum Betrieb eines Kraftfahrzeug-Multimediasystems, wenn versucht wird, ein Mobilgerät (14) mit dem Kraftfahrzeug zu koppeln, wobei in dem Kraftfahrzeug automatisch versucht wird, eine Datenverbindung mit dem Mobilgerät (14) herzustellen;
**dadurch gekennzeichnet, dass**
- in dem Kraftfahrzeug über die hergestellte Datenverbindung automatisch geprüft wird, ob in dem Mobilgerät (14) ein bestimmtes Programm gespeichert ist, das sicherstellt, dass bei der Zusammenarbeit von Mobilgerät (14) und Multimediasystem bestimmte, vom Kraftfahrzeughersteller vorgegebene Spezifikationen in Bezug auf Interaktionen mit dem Fahrer des Kraftfahrzeugs eingehalten werden; und
- eine über die prüfende Datenverbindung hinausgehende Zusammenarbeit von Mobilgerät (14) und Multimediasystem, welche Interaktionen des Multimediasystems mit dem Fahrer des Kraftfahrzeugs beeinflusst, erst dann ermöglicht wird, wenn das bestimmte Programm auf dem Mobilgerät (14) läuft, und sodann unter der Kontrolle des bestimmten Programms erfolgt.

2. Verfahren nach Anspruch 1,
**dadurch gekennzeichnet, dass**
die zu ermöglichende Kopplung des Mobilgeräts (14) mit dem Kraftfahrzeug eine mechanische Kopplung dazwischen umfasst.

3. Verfahren nach Anspruch 1 oder 2,
**dadurch gekennzeichnet, dass**
die zu ermöglichende Kopplung des Mobilgeräts (14) mit dem Kraftfahrzeug eine Kabel- oder Drahtlosverbindung für eine über die prüfende Datenverbindung hinausgehende Datenkommunikation und/oder eine Stromversorgungsverbindung zwischen dem Mobilgerät (14) und dem Kraftfahrzeug-Multimediasystem umfasst.

4. Verfahren nach Anspruch 2 oder 3,
**dadurch gekennzeichnet, dass**
die zu ermöglichende Kopplung des Mobilgeräts (14) mit dem Kraftfahrzeug eine stabile Anbringung des Mobilgeräts (14) an einem in Reichweite des Fahrers befindlichen Platz im Kraftfahrzeug umfasst.

5. Verfahren nach Anspruch 2 oder 3,
**dadurch gekennzeichnet, dass**
die zu ermöglichende Kopplung des Mobilgeräts (14) mit dem Kraftfahrzeug eine stabile Anbringung des Mobilgeräts (14) vor einem Bildschirm (8) am Armaturenbrett (2) des Kraftfahrzeugs umfasst.

6. Verfahren nach Anspruch 5,
**dadurch gekennzeichnet, dass**
die Anbringung des Mobilgeräts (14) vor dem Bildschirm (8) mit Hilfe einer Blendschutzhaube (12) für den Bildschirm (8) erfolgt.

7. Verfahren nach Anspruch 6,
**dadurch gekennzeichnet, dass**
die Blendschutzhaube (12) beweglich ist, derart, dass sie in eine Halteposition bewegt werden kann, in der sie das Mobilgerät (14) vor dem Bildschirm (8) festhält, wobei eine Bewegung der Blendschutzhaube (12) in die Halteposition mechanisch blockiert wird, wenn das bestimmte Programm nicht auf dem Mobilgerät (14) läuft.

8. Verfahren nach einem der vorhergehenden Ansprüche,
**dadurch gekennzeichnet, dass**
wenn versucht wird, das Mobilgerät (14) mit dem Kraftfahrzeug zu koppeln, das bestimmte Programm, sofern es nicht schon läuft, automatisch auf dem Mobilgerät (14) gestartet wird, oder der Fahrzeuginsasse aufgefordert wird, das bestimmte Programm auf dem Mobilgerät (14) zu starten.

9. Vorrichtung zum Betrieb eines Kraftfahrzeug-Multimediasystems,
**dadurch gekennzeichnet, dass**
die Vorrichtung zur Durchführung des Verfahrens gemäß einem der vorhergehenden Ansprüche eingerichtet ist.

## Claims

1. Method for operating a motor vehicle multimedia system when an attempt is made to couple a mobile appliance (14) to the motor vehicle, wherein an attempt is automatically made in the motor vehicle to set up a data link to the mobile appliance (14);
**characterized in that**
- the data link that has been set up is used in the motor vehicle to automatically check whether the mobile appliance (14) stores a particular program which ensures that particular specifications prescribed by the motor vehicle manufacturer for interactions with the driver of the motor vehicle are observed while the mobile appliance (14) and the multimedia system are cooperating; and
- cooperation between the mobile appliance (14) and the multimedia system that goes beyond the checking data link and that influences interactions between the multimedia system and the driver of the motor vehicle is rendered possible only when the particular program is running on the mobile appliance (14), and then takes place under the control of the particular program.

2. Method according to Claim 1,
**characterized in that**
the coupling that is to be rendered possible between the mobile appliance (14) and the motor vehicle comprises mechanical coupling between the two.

3. Method according to Claim 1 or 2,
**characterized in that**
the coupling that is to be rendered possible between the mobile appliance (14) and the motor vehicle comprises a wire or wireless link for data communication that goes beyond the checking data link and/or a power supply connection between the mobile appliance (14) and the motor vehicle multimedia system.

4. Method according to Claim 2 or 3,
**characterized in that**
the coupling that is to be rendered possible between the mobile appliance (14) and the motor vehicle comprises robust mounting of the mobile appliance (14) at a location in the motor vehicle that is within reach of the driver.

5. Method according to Claim 2 or 3,
**characterized in that**
the coupling that is to be rendered possible between the mobile appliance (14) and the motor vehicle comprises robust mounting of the mobile appliance (14) in front of a screen (8) on the dashboard (2) of the motor vehicle.

6. Method according to Claim 5,
**characterized in that**
the mobile appliance (14) is mounted in front of the screen (8) by using an antiglare hood (12) for the screen (8).

7. Method according to Claim 6,
**characterized in that**
the antiglare hood (12) is movable such that it can be moved into a retaining position in which it holds the mobile appliance (14) firmly in front of the screen (8), with movement of the antiglare hood (12) into the retaining position being mechanically blocked when the particular program is not running on the mobile appliance (14).

8. Method according to one of the preceding claims,
**characterized in that**
when an attempt is made to couple the mobile appliance (14) to the motor vehicle the particular program, if not already running, is automatically started on the mobile appliance (14), or the vehicle occupant is asked to start the particular program on the mobile appliance (14).

9. Apparatus for operating a motor vehicle multimedia system,
**characterized in that**
the apparatus is set up to carry out the method according to one of the preceding claims.

## Revendications

1. Procédé pour faire fonctionner un système multimédia de véhicule automobile lorsqu'une tentative est faite de connecter un appareil mobile (14) avec le véhicule automobile, une tentative d'établissement d'une liaison de données avec l'appareil mobile (14) ayant automatiquement lieu dans le véhicule automobile ; **caractérisé en ce que**
- un contrôle est effectué automatiquement dans le véhicule automobile, par le biais de la liaison de données établie, en vue de vérifier si un programme donné est enregistré dans l'appareil mobile (14), lequel garantit que des spécifications prédéfinies par le constructeur du véhicule automobile concernant les interactions avec le conducteur du véhicule automobile sont respectées lors de la collaboration de l'appareil mobile (14) et du système multimédia ; et
- une collaboration de l'appareil mobile (14) et du système multimédia qui va au-delà de la liaison de données de contrôle et qui influence les interactions du système multimédia avec le conducteur du véhicule automobile n'est rendue possible que lorsque le programme défini s'exécute sur l'appareil mobile (14), et se déroule alors sous le contrôle du programme défini.

2. Procédé selon la revendication 1, **caractérisé en ce que** la connexion à rendre possible de l'appareil mobile (14) avec le véhicule automobile comprend un couplage mécanique entre eux.

3. Procédé selon la revendication 1 ou 2, **caractérisé en ce que** la connexion à rendre possible de l'appareil mobile (14) avec le véhicule automobile comprend une liaison filaire ou sans fil pour une communication de données allant au-delà de la liaison de données de contrôle et/ou une liaison d'alimentation électrique entre l'appareil mobile (14) et le système multimédia de véhicule automobile.

4. Procédé selon la revendication 2 ou 3, **caractérisé en ce que** la connexion à rendre possible de l'appareil mobile (14) avec le véhicule automobile comprend une installation stable de l'appareil mobile (14) au niveau d'un endroit dans le véhicule automobile qui se trouve à portée d'atteinte du conducteur.

5. Procédé selon la revendication 2 ou 3, **caractérisé en ce que** la connexion à rendre possible de l'appareil mobile (14) avec le véhicule automobile comprend une installation stable de l'appareil mobile (14) devant un écran (8) sur le tableau de bord (2) du véhicule automobile.

6. Procédé selon la revendication 5, **caractérisé en ce que** l'installation de l'appareil mobile (14) devant l'écran (8) est effectuée à l'aide d'un capot anti-éblouissement (12) pour l'écran (8).

7. Procédé selon la revendication 6, **caractérisé en ce que** le capot anti-éblouissement (12) est mobile de telle sorte qu'il peut être déplacé dans une position de retenue dans laquelle il maintient fermement l'appareil mobile (14) devant l'écran (8), un mouvement du capot anti-éblouissement (12) dans la position de maintien étant bloqué mécaniquement lorsque le programme défini ne s'exécute pas sur l'appareil mobile (14).

8. Procédé selon l'une des revendications précédentes, **caractérisé en ce que** lors de la tentative de connexion de l'appareil mobile (14) avec le véhicule automobile, le programme défini, sous réserve qu'il ne s'exécute pas encore, est automatiquement démarré sur l'appareil mobile (14) ou l'occupant du véhicule est invité à démarrer le programme défini sur l'appareil mobile (14).

9. Dispositif pour faire fonctionner un système multimédia de véhicule automobile, **caractérisé en ce que** le dispositif est conçu pour mettre en oeuvre le procédé selon l'une des revendications précédentes.
